# EUROPÄISCHE PATENTSCHRIFT

(11) **EP 1 149 258 B1**
(45) Veröffentlichungstag und Bekanntmachung des Hinweises auf die Patenterteilung: **22.09.2004**
(21) Anmeldenummer: 00912438.9
(22) Anmeldetag: 27.01.2000
(51) Int. Cl.: F23K 5/14, F23D 11/00, F16K 23/00

(54) **SYSTEM AUS EINER ÖLPUMPE UND EINEM VENTIL FÜR ÖLBRENNER**
SYSTEM MADE OF AN OIL PUMP AND OF A VALVE FOR OIL BURNERS
SYSTEME COMPOSE D'UNE POMPE A MAZOUT ET D'UNE VANNE POUR UN BRULEUR A MAZOUT

(30) Priorität: 01.02.1999 DE 19903831
(43) Veröffentlichungstag der Anmeldung: 31.10.2001
(73) Patentinhaber: SATRONIC AG, 8157 Dielsdorf (CH)
(72) Erfinder: LÜSCHER, Michel, CH-8309 Breite-Nürensdorf (CH)
(74) Vertreter: Leson, Thomas Johannes Alois, Dipl.-Ing.
(86) Internationale Anmeldenummer: PCT/EP2000/000614
(87) Internationale Veröffentlichungsnummer: WO 2000/046549

(56) Entgegenhaltungen:
- EP-A- 0 624 711
- EP-A- 0 808 795
- US-A- 2 468 960
- US-A- 3 886 974
- US-A- 4 270 561

## Beschreibung

Die Erfindung betrifft ein System aus einer Ölpumpe und einem Ventil, insbesondere einem Magnetventil, für Ölbrenner. Ein derartiges System gemäß den im Oberbegriff von Anspruch 1 definierten Merkmalen ist aus der US-A-4 270 561 bekannt.

Bei Ölbrennern wird mit Hilfe einer Ölpumpe der Brennstoff Öl von einem Öltank angesaugt und unter Druck zu einer Öldüse, in der Regel zu einer Druckzerstäuberdüse, gefördert. An der Druckzerstäuberdüse wird der Brennstoff - also das Öl - zu feinen Tröpfchen zerstäubt, mit eingeblasener Luft vermischt und in einer Flamme verbrannt. Die Flamme wird durch einen entsprechenden Zündmechanismus gezündet. Sie brennt selbständig und stabil, solange Verbrennungsluft und Öl in ausreichendem Maße und unter entsprechenden Bedingungen, wie z.B. ausreichendem Druck und geeigneten Strömungsbedingungen, zugeführt werden.

Bei derartigen Druckzerstäuberdüsen kann sich beim Abschalten des Brenners ein Nachtropfen des Brennstoffs Öl einstellen. Dieses Öl sammelt sich dann unverbrannt in einem Brennerraum. Dies ist einerseits von Nachteil, da dann bei einem Neustart des Brenners Öl im Brennerraum überschüssig vorliegt, daß sich in Form von unverbrannten Kohlenwasserstoffen im Abgas bemerkbar macht und so die Emissionswerte des Brenners erheblich verschlechtert. Andererseits ist es von Nachteil, da diese unverbrannten Ölrückstände den Brennermischkopf und den Brennerraum so stark verschmutzen können, daß beispielsweise unerwünschter Ruß aufgebaut werden kann und dadurch erhebliche Brennerstörungen verursacht werden können. Ein Nachtropfen von Öl beim Abschalten des Brenners muß also vermieden werden.

Aus dem Stand der Technik, so z.B. aus der US 5,799,871 der EP 0 806 246 und der EP 0 731 315, sind verschiedene Düsenabschlußventile bekannt, die ein Nachtropfen des Öls in den Brennerraum beim Abschalten des Ölbrenners verhindern sollen.

Hiervon ausgehend liegt der vorliegenden Erfindung das Problem zu Grunde, ein neuartiges System zu schaffen, welches mit einfachen konstruktiven Mitteln ein Nachtropfen des Öls verhindert.

Dieses Problem wird durch ein System mit den Merkmalen des Anspruchs 1 gelöst.

Weitere vorteilhafte Ausgestaltungen der Erfindung ergeben sich aus den Unteransprüchen und der Beschreibung. Nachfolgend wird ein bevorzugtes Ausführungsbeispiel der Erfindung anhand der Zeichnung näher erläutert. In der Zeichnung zeigt:
- Fig. 1: ein erfindungsgemäßes System aus einer Ölpumpe und einem Ventil, nämlich einem Magnetventil, in einer einen Ölfluß freigegebenen Stellung in stark schematisierter Darstellung, und
- Fig. 2: das erfindungsgemäße System aus der Ölpumpe und dem Magnetventil in einer den Ölfluß sperrenden Stellung.

Das in der Zeichnung dargestellte, erfindungsgemäße System verhindert mit einfachen konstruktiven Mitteln ein Nachtropfen von Öl in einen Brennerraum eines im Detail nicht dargestellten Ölbrenners.

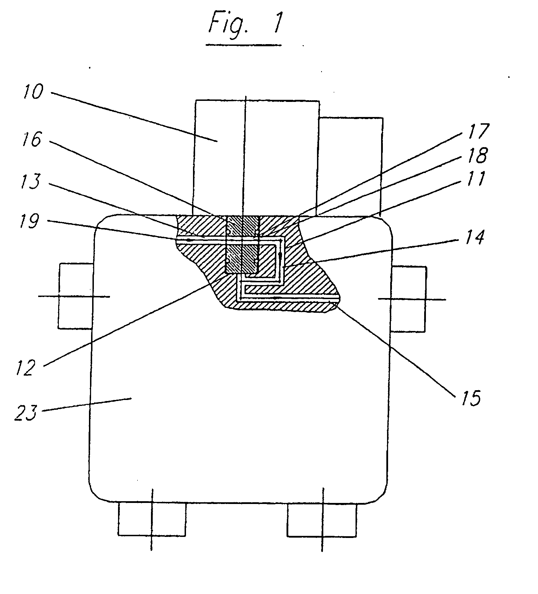

Figur 1 zeigt das erfindungsgemäße System mit einem Ausschnitt aus einer Ölpumpe 23, auf welcher ein Ventil, nämlich ein Magnetventil 10, aufgebaut ist, welches im Bereich der pumpeninternen Ölleitung 11 (auch Öldruckleitung genannt) angeordnet ist, die von einer Bohrung 12 unterbrochen ist. Die Bohrung 12 unterteilt demnach die Ölleitung 11 prinzipiell in zwei Abschnitte 13 und 14, nämlich in einen ersten Abschnitt 13, der in Ölflußrichtung vor der Bohrung 12 verläuft, und in einen zweiten Abschnitt 14, der in Ölflußrichtung nach der Bohrung 12 angeordnet ist. Ein Endabschnitt 15 des zweiten Abschnitts 14 dient der Ankopplung zum nicht dargestellten Düsenstock mit Druckzerstäuberdüse.

Innerhalb der Bohrung 12 ist ein Schließkörper 16 angeordnet. Der Schließkörper 16 ist innerhalb der Bohrung 12 axial verschiebbar gelagert.

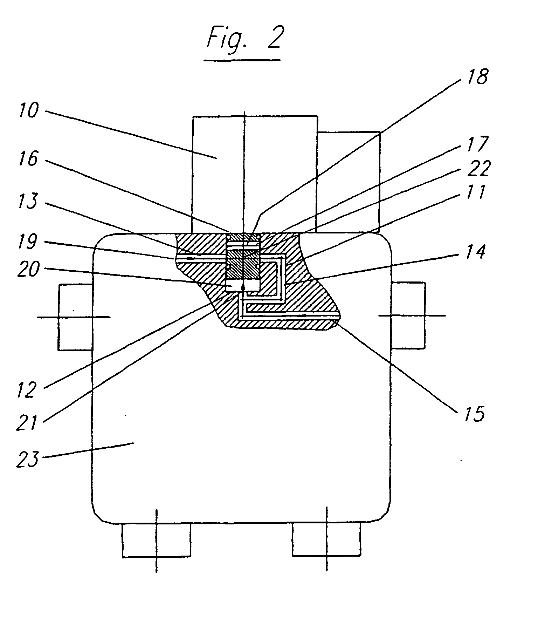

Gemäß Figuren 1, 2 verfügt der Schließkörper 16 über eine Öldurchlaß-Bohrung 17. In der in Figur 1 dargestellten Position bzw. Stellung des Schließkörpers 16 ergänzt die Öldurchlaß-Bohrung 17 bei Ventilfreigabe die pumpeninterne Ölleitung 11 und gibt so den Ölfluß vom Öltank in Richtung auf die Druckzerstäuberdüse frei. Hierzu fällt eine Mittelachse 18 der Öldurchlaß-Bohrung 17 mit einer Mittelachse 19 der Ölleitung 11 im Bereich der Bohrung 12 zusammen. Darüber hinaus sind die Durchmesser der Öldurchlaß-Bohrung 17 und der Ölleitung 11 im Bereich der Bohrung 12 aufeinander angepaßt, d.h. sie entsprechen einander.

Soll der Ölbrenner abgeschaltet und der Ölfluß vom nicht dargestellten Öltank in Richtung auf die ebenfalls nicht dargestellte Druckzerstäuberdüse unterbrochen werden, so wird der Schließkörper 16 des Magnetventils 10 axial verschoben, nämlich in die in Figur 2 dargestellte Stellung bzw. Position bewegt. In dieser zweiten Stellung des Schließkörpers 16 ist die pumpeninteme Ölleitung 11 durch den Schließkörper 16 unterbrochen. Darüber hinaus wird in dieser Stellung des Schließkörpers 16 unterhalb desselben ein Aufnahmeraum 20 geschaffen, wodurch innerhalb des Abschnitts 14 der Ölleitung 11 und damit auch innerhalb des Endabschnitts 15 ein Unterdruck erzeugt wird, infolge dessen die Richtung des Ölflusses innerhalb des Endabschnitts 15 umgekehrt wird. Das Öl wird in dieser Stellung demnach von der Druckzerstäuberdüse des Ölbrenners weggezogen und im Aufnahmeraum 20 gesammelt. Hierzu steht die Bohrung 12 über eine entsprechende Öffnung 21 mit dem zweiten Abschnitt 14 der Ölleitung 11 sowie mit dem Endabschnitt 15 in Verbindung.

Letztendlich sei noch angemerkt, daß bei dem in der Zeichnung dargestellten Ausführungsbeispiel die Mittelachse 18 der Öldurchlaß-Bohrung 17 in etwa senkrecht zu einer Mittelachse 22 des Schließkörpers 16 verläuft.

Aus der obigen Beschreibung des erfindungsgemäßen Systems folgt unmittelbar, daß ein Nachtropfen des Öls beim Abschalten des Ölbrenners vermieden wird. Das System aus Ölpumpe 23 und Magnetventil 10 verfügt sozusagen über eine integrierte Ölrücksaugung. Der Vollständigkeit halber sei angemerkt, daß an Stelle eines Magnetventiles auch andere Ventile zum Einsatz kommen können.

### Bezugszeichenliste:

- 10: Magnetventil
- 11: Ölleitung
- 12: Bohrung
- 13: Abschnitt
- 14: Abschnitt
- 15: Endabschnitt
- 16: Schließkörper
- 17: Öldurchlaß - Bohrung
- 18: Mittelachse
- 19: Mittelachse
- 20: Aufnahmeraum
- 21: Öffnung
- 22: Mittelachse
- 23: Ölpumpe

## Patentansprüche

1. System mit einer Ölpumpe (23) und einem Ventil, insbesondere einem Magnetventil (10), für Ölbrenner, mit den folgenden Merkmalen:
a) eine Ölleitung (11), die von einer Bohrung (12) in zwei Abschnitte (13, 14) unterteilt, ist;
b) in die Bohrung (12) ragt ein Schließkörper (16) des Ventils (10), wobei der Schließkörper (16) in der Bohrung (12) längs einer Mittelachse (22) desselben axial verschiebbar gelagert ist,
c) durch den Schließkörper (16) führender, Öldurchlaß (17),
d) der Öldurchlaß (17) im Schließkörper (16) verbindet in einer ersten Stellung des Ventils (10) die beiden Abschnitte (13, 14) der Ölleitung (11) und gibt so einen Ölfluß durch diese frei;
e) in einer zweiten Stellung des Ventils (10) unterbricht der Schließkörper (16) die Verbindung zwischen den beiden Abschnitten (13, 14) der Ölleitung (11), **dadurch gekennzeichnet, daß** die Ölleitung eine interne Leitung der Pumpe ist; daß der Öldurchlaß (17) als Öldurchlaß-Bohrung ausgebildet ist; daß in der, zweiten Stellung der Schließkörper (16) derart verschoben ist, daß innerhalb der Bohrung (12), in die der Schließkörper (16) ragt, ein Aufnahmeraum (20) für Öl entsteht; und daß der Aufnahmeraum (20) über eine Öffnung (21) mit einem Endabschnitt (15) der Ölleitung (11) verbunden ist, der zu einem Düsenstock führt, wodurch in der zweiten Stellung des Ventils (10) in dem Endabschnitt (15) ein Ölrückfluß vom Düsenstock zum Aufnahmeraum (20) möglich ist.

2. System nach Anspruch 1, **dadurch gekennzeichnet, daß** eine Mittelachse (18) der Öldurchlaß - Bohrung (17) in etwa senkrecht zu der Mittelachse (22) des Schließkörpers (16) verläuft.

3. System nach Anspruch 1 oder 2, **dadurch gekennzeichnet, daß** in der ersten Stellung des Magnetventils (10) die Mittelachse (18) der Öldurchlaß - Bohrung (17) mit einer Mittelachse (19) der pumpenintemen Ölleitung (11) im Bereich der Bohrung (12) zusammenfällt.

4. System nach einem oder mehreren der Ansprüche 1 bis 3, **dadurch gekennzeichnet, daß** die Durchmesser der Öldurchlaß - Bohrung (17) und der pumpeninternen Ölleitung (11) zumindest im Bereich der Bohrung (12) einander entsprechen.

## Claims

1. System with an oil pump (23) and with a valve, in particular a solenoid valve (10), for oil burners, having the following features:
a) an oil line (11) which is subdivided by a bore (12) into two portions (13, 14),
b) a closing body (16) of the valve (10) projects into the bore (12), the closing body (16) being mounted axially displaceably along a mid-axis (22) of the latter in the bore (12),
c) an oil passage (17) leading through the closing body (16),
d) the oil passage (17) in the closing body (16), in a first setting of the valve (10), connects the two portions (13, 14) of the oil line (11) and thus releases an oil flow through the latter,
e) in a second setting of the valve (10), the closing body (16) interrupts the connection between the two portions (13, 14) of the oil line (11),
**characterized in that** the oil line is an internal line of the pump, **in that** the oil passage (17) is designed as an oil passage bore, **in that**, in the second setting, the closing body (16) is displaced in such a way that a reception space (20) for oil is obtained within the bore (12) into which the closing body (16) projects, and **in that** the reception space (20) is connected via an orifice (21) to an end portion (15) of the oil line (11), the said end portion leading to a nozzle assembly, as a result of which, in the second setting of the valve (10), an oil return from the nozzle assembly to the reception space (20) is possible in the end portion (15).

2. System according to Claim 1, **characterized in that** a mid-axis (18) of the oil passage bore (17) runs approximately perpendicularly to the mid-axis (22) of the closing body (16).

3. System according to Claim 1 or 2, **characterized in that**, in the first setting of the solenoid valve (10), the mid-axis (18) of the oil passage bore (17) coincides with a mid-axis (19) of the pump-internal oil line (11) in the region of the bore (12).

4. System according to one or more of Claims 1 to 3, **characterized in that** the diameters of the oil passage bore (17) and of the pump-internal oil line (11) correspond to one another at least in the region of the bore (12).

## Revendications

1. Système comportant une pompe à huile (23) et une soupape, en particulier une soupape magnétique (10), pour brûleurs à mazout, présentant les caractéristiques suivantes :
a) une conduite de mazout (11) qui est divisée par un perçage (12) en deux sections (13, 14),
b) dans le perçage (12) s'engage un corps d'obturation (16) de la soupape (10), le corps d'obturation (16) étant monté dans le perçage (12) de manière à pouvoir coulisser axialement le long d'un axe médian (22) de celui-ci,
c) passage de mazout (17) passant à travers le corps d'obturation (16),
d) le passage de mazout (17) dans le corps d'obturation (16) relie, dans une première position de la soupape (10), les deux sections (13, 14) de la conduite de mazout (11) et libère ainsi un courant de mazout à travers celles-ci ;
e) dans une deuxième position de la soupape (10), le corps d'obturation (16) interrompt la liaison entre les deux sections (13, 14) de la conduite de mazout (11),
**caractérisé en ce que** la conduite de mazout est une conduite interne à la pompe ; **en ce que** le passage de mazout (17) est réalisé comme perçage pour passage du mazout; **en ce que** dans la deuxième position le corps d'obturation (16) est déplacé de manière qu'à l'intérieur du perçage (12) dans lequel s'engage le corps d'obturation (16), il se forme un espace de réception (20) pour le mazout ; et **en ce que** l'espace de réception (20) est relié, par une ouverture (21), à une section terminale (15) de la conduite de mazout (11), qui mène à un porte-buse, un retour du mazout du porte-buse à l'espace de réception (20) étant possible dans la deuxième position de la soupape (10), dans la section terminale (15).

2. Système selon la revendication 1, **caractérisé en ce qu'**un axe médian (18) du perçage pour passage de mazout (17) s'étend à peu près perpendiculairement à l'axe médian (22) du corps d'obturation (16).

3. Système selon la revendication 1 ou 2, **caractérisé en ce que** dans la première position de la soupape magnétique (10), l'axe médian (18) du perçage pour passage de mazout (17) coïncide avec un axe médian (19) de la conduite de mazout (11) interne à la pompe, dans la zone du perçage (12).

4. Système selon une ou plusieurs des revendications 1 à 3, **caractérisé en ce que** les diamètres du perçage pour passage de mazout (17) et de la conduite de mazout (11) interne à la pompe se correspondent au moins dans la zone du perçage (12).
